# EUROPÄISCHE PATENTSCHRIFT

(11) **EP 0 824 823 B1**
(45) Veröffentlichungstag und Bekanntmachung des Hinweises auf die Patenterteilung: **09.02.2000**
(21) Anmeldenummer: 96910909.9
(22) Anmeldetag: 29.04.1996
(51) Int. Cl.: H04N 5/44

(54) **SPEICHERVERWALTUNGSVERFAHREN**
STORE MANAGEMENT PROCESS
PROCEDE DE GESTION DE MEMOIRE

(30) Priorität: 05.05.1995 DE 19516667
(43) Veröffentlichungstag der Anmeldung: 25.02.1998
(73) Patentinhaber: SIEMENS AKTIENGESELLSCHAFT, 80333 München (DE)
(72) Erfinder: HEIN, Sören, D-80538 München (DE)
(86) Internationale Anmeldenummer: DE9600741
(87) Internationale Veröffentlichungsnummer: WO9635292

(56) Entgegenhaltungen:
- EP-A- 0 070 465
- GB-A- 2 252 465

## Beschreibung

Die vorliegende Erfindung bezieht sich auf ein Speicherverwaltungsverfahren gemäß Patentanspruch 1.

Ein derartiges Verfahren zum Einspeichern und Auslesen von Daten in eine bzw. aus einer Speichereinrichtung kann überall dort Anwendung finden, wo Speichereinrichtungen zum Speichern von Daten zum Einsatz kommen.

Der Einsatz von vorteilhaft arbeitenden Verfahren dieser Art ist jedoch insbesondere dort von Bedeutung, wo es regelmäßig erforderlich ist, große Datenmengen einzuspeichern und auszulesen.

Dies ist beispielsweise bei Bildverarbeitungssystemen, Videosystemen usw. der Fall, und zwar insbesondere dann, wenn eine Bilddatenausgabeeinheit auf einer Bildanzeigeeinheit anzuzeigende Bilddaten wie z.B. Videodaten in einer anderen Reihenfolge ausgibt als sie die Bildanzeigeeinheit für eine bestimmungsgemäße Anzeige geliefert bekommen muß. Dazu geeignete Vorrichtungen sind z.B. aus EP-A-0 070 465 und GB-A-2 252 465 bekannt, die eine Wandlung vom Zeilensprungformat in ein zeilensequentielles Format ermöglichen.

Dies ist zum Beispiel auch dann der Fall, wenn die Bilddatenausgabeeinheit sämtliche Daten eines anzuzeigenden Bildes sequentiell ausgibt, die Bildanzeigeeinheit die Daten jedoch in einer für die Durchführung des Zeilensprungverfahrens geeigneten Reihenfolge benötigt.

Als konkrete Einsatzmöglichkeit für ein vorteilhaft arbeitendes Verfahren der im Oberbegriff des Patentanspruchs 1 genannten Art sei ein MPEG-2 - Videodecodersystem nach ISO/IEC-Standard 13818-2 genannt.

Um die von einer Bilddatenausgabeeinheit ausgegebenen Daten in eine für die Durchführung des Zeilensprungverfahrens geeignete Reihenfolge umzusetzen, muß eine Umsetzungseinheit vorgesehen werden.

Zum besseren Verständnis des Aufbaus und der Funktion von bekannten Umsetzungseinheiten und zum besseren Verständnis des erfindungsgemäßen Verfahrens zum Betreiben von Umsetzungseinheiten dieser Art wird zunächst auf einige Ausgangsbedingungen eingegangen, von denen bei den folgenden Ausführungen ausgegangen wird.

Es wird angenommen, daß die Bilddatenausgabeeinheit in regelmäßigen zeitlichen Abständen Bilddaten wie z.B. Videodaten jeweils einer Zeile ausgibt, wobei die Reihenfolge der ausgegebenen Zeilen streng sequentiell vom oberen Ende zum unteren Ende des anzuzeigenden Bildes verläuft und damit nicht einer für das Zeilensprungverfahren geeigneten Reihenfolge entspricht.

Ferner wird angenommen, daß der Bildanzeigeeinheit die anzuzeigenden Daten in einer für das Zeilensprungverfahren geeigneten Reihenfolge zuzuführen sind, wobei die anzuzeigenden Zeilen mit den selben zeitlichen Abständen zuzuführen sind wie Zeilen von der Bilddatenausgabeeinheit ausgegeben werden.

Wenn von einer für das Zeilensprungverfahren geeigneten Reihenfolge die Rede ist, dann ist damit eine Reihenfolge gemeint, bei welcher die Gruppe aller geradzahligen Zeilen eines Bildes und die Gruppe aller ungeradzahligen Zeilen des Bildes nicht ineinander verschachtelt, sondern zeitlich aufeinanderfolgend übertragen werden. Die Gruppe der geradzahligen Zeilen ergibt dabei ein erstes Halbbild, und die Gruppe der ungeradzahligen Zeilen ergibt ein zweites Halbbild, wobei jedes der Halbbilder naturgemäß nur die Hälfte der von der Bilddatenausgabeeinheit pro anzuzeigendem Bild ausgegebenen Zeilen umfaßt. Durch Überlagerung der zusammengehörenden Halbbilder erhält man auf der Bildanzeigeeinheit das von der Bilddatenausgabeeinheit letztendlich auszugegebene Vollbild. Auf der Bildanzeigeeinheit werden pro Vollbild zwei Halbbilder angezeigt; wenn die Vollbild-Frequenz beispielsweise 25 Hz beträgt, beträgt die Halbbild-Frequenz 50 Hz.

Die einfachste bekannte Ausführungsform einer Umsetzungseinheit zur Umsetzung der von der Bilddatenausgabeeinheit ausgegebenen Daten in für die Bildanzeigeeinheit geeignete Daten umfaßt zwei digitale Speicher, von denen jeder eine Speicherkapazität aufweist, die zur Speicherung der Daten eines kompletten anzuzeigenden Bildes, d.h. zur Speicherung der Daten eines Vollbildes ausreicht.

Diese Umsetzungseinheit wird so betrieben, daß in einen der Speicher die von der Bilddatenausgabeeinheit momentan ausgegebenen, für die Anzeige des nächsten Bildes benötigten Daten eingespeichert werden, während zur gleichen Zeit aus dem anderen Speicher die für das gerade anzuzeigende Bild bereitzustellenden Halbbilddaten in der entsprechenden Reihenfolge ausgelesen werden.

Verwendet man ein derartiges Verfahren zur Darstellung eines Vollbildes nach der PAL-Norm, so muß jeder der zwei bereitzustellenden digitalen Speicher eine Speicherkapazität von 4,75 MBit aufweisen. Derart große Speicherkapazitäten verursachen hohe Kosten und große Geräte.

Der vorliegenden Erfindung liegt daher die Aufgabe zugrunde, das Speicherverwaltungsverfahren gemäß dem Oberbegriff des Patentanspruchs 1 derart weiterzubilden, daß die Umsetzungseinheit mit einem Speicher mit relativ geringer Speicherkapazität auskommt.

Diese Aufgabe wird erfindungsgemäß durch die Merkmale des Patentanspruchs 1 gelöst.

Demnach ist vorgesehen, daß das Einspeichern von Daten in die Speichereinrichtung derart erfolgt, daß dabei jeweils die zuletzt aus der Speichereinrichtung ausgelesenen Daten durch die einzuspeichernden Daten überschrieben werden.

Indem die zuletzt ausgelesenen Daten automatisch sofort nach dem Auslesen derselben durch neu in die Speichereinrichtung einzuspeichernde Daten überschrieben werden, wird die Speicherkapazität der Speichereinrichtung stets optimal genutzt, denn die Speichereinrichtung ist auf diese Weise zu keiner Zeit durch Daten blockiert, welche bereits abgeholt wurden und mithin nicht mehr benötigt werden.

Es wurde damit ein Verfahren geschaffen, das es ermöglicht, eine Umsetzungseinheit mit relativ geringer Speicherkapazität zu verwenden.

Das jeweils abwechselnd erfolgende Auslesen gespeicherter Daten und Einspeichern neuer Daten, d.h. die Tatsache, daß bei der erfindungsgemäßen Art von Speicherverwaltung mit dem Auslesen der Daten bereits beginnbar ist, bevor eine zusammengehörende Gesamtmenge von in die Speichereinrichtung einzuspeichernden Daten vollständig abgespeichert ist, hat zur Folge, daß mit der Weiterverarbeitung bzw. der Anzeige der Daten schon relativ frühzeitig begonnen werden kann.

Die Tatsache, daß aufeinanderfolgende Lese- und Schreibzugriffe jeweils auf ein und denselben Speicherbereich erfolgen, bewirkt zudem einen verringerten Aufwand bei der Einstellung der jeweiligen Lese- und Schreibadressen.

Vorteilhafte Weiterbildungen der Erfindung sind Gegenstand der Unteransprüche.

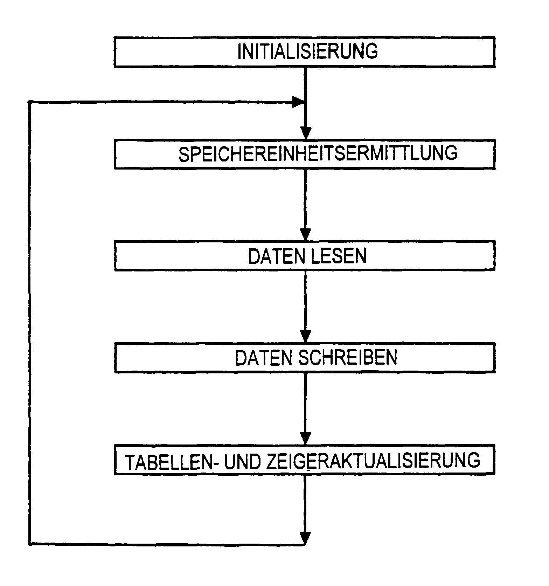

Die Erfindung wird nachfolgend anhand von Ausführungsbeispielen unter Bezugnahme auf die Zeichnung näher erläutert.

Die Figur zeigt ein Ablaufdiagramm des erfindungsgemäßen Speicherverwaltungsverfahrens.

Das nachfolgend beschriebene erfindungsgemäße Speicherverwaltungsverfahren dient zur Umsetzung von Daten, insbesondere Videodaten, welche von einer Bilddatenausgabeeinheit ausgegeben wurden, in eine zur Durchführung des Zeilensprungverfahrens geeignete Reihenfolge.

Wenngleich die vorliegende Erfindung unter Bezugnahme auf diesen ganz konkreten Anwendungsfall beschrieben wird, ist sie gleichwohl nicht hierauf beschränkt, sondern auch überall dort einsetzbar, wo gleiche oder ähnliche Datenumsetzungen erforderlich sind.

Die Datenumsetzungseinheit zur Durchführung des erfindungsgemäßen Verfahrens kann im Gegensatz zu der eingangs beschriebenen Umsetzungseinheit mit nur einer einzigen Speichereinrichtung (vorzugsweise in Form eines digitalen Speichers) auskommen, wobei diese Speichereinrichtung eine Speicherkapazität von nur einem halben Vollbild aufweisen muß.

Bei der folgenden Beschreibung wird aus Gründen der Anschaulichkeit davon ausgegangen, daß ein 16 Zeilen umfassendes Vollbild im Zeilensprungverfahren auf einer Bildanzeigeeinheit wie einem Monitor oder dergleichen dargestellt werden soll. D.h., bei vorliegenden Ausführungsbeispiel weist die Umsetzungseinheit einen Speicher mit einer Speicherkapazität für Daten von 8 Zeilen auf.

Bezeichnet man den Speicherbereich, in welchem die Daten einer Zeile gespeichert werden, als eine Speichereinheit, so weist der Speicher acht Speichereinheiten auf.

Eine derart geringe Speicherkapazität wird durch das nachfolgend beschriebene erfindungsgemäße Speicherverwaltungsverfahren ermöglicht.

Zu Beginn des Ablaufs dieses Speicherverwaltungsverfahrens werden die Daten der ersten acht Zeilen des darzustellenden Vollbildes in den Speicher der Umsetzungseinheit eingespeichert, und zwar die Daten der nullten Zeile in eine nullte Speichereinheit, die Daten der ersten Zeile in die erste Speichereinheit, die Daten der zweiten Zeile in die zweite Speichereinheit, die Daten der dritten Zeile in die dritte Speichereinheit, die Daten der vierten Zeile in die vierte Speichereinheit, die Daten der fünften Zeile in die fünfte Speichereinheit, die Daten der sechsten Zeile in die sechste Speichereinheit, und die Daten der siebten Zeile in die siebte Speichereinheit.

Nachdem dies abgeschlossen ist, wird mit dem Auslesen der gespeicherten Daten begonnen, wobei jedoch parallel dazu auch das Einspeichern neuer Daten weitergeführt wird.

Die dabei stattfindenden Vorgänge werden anhand der nachfolgenden Tabelle 1 erläutert.

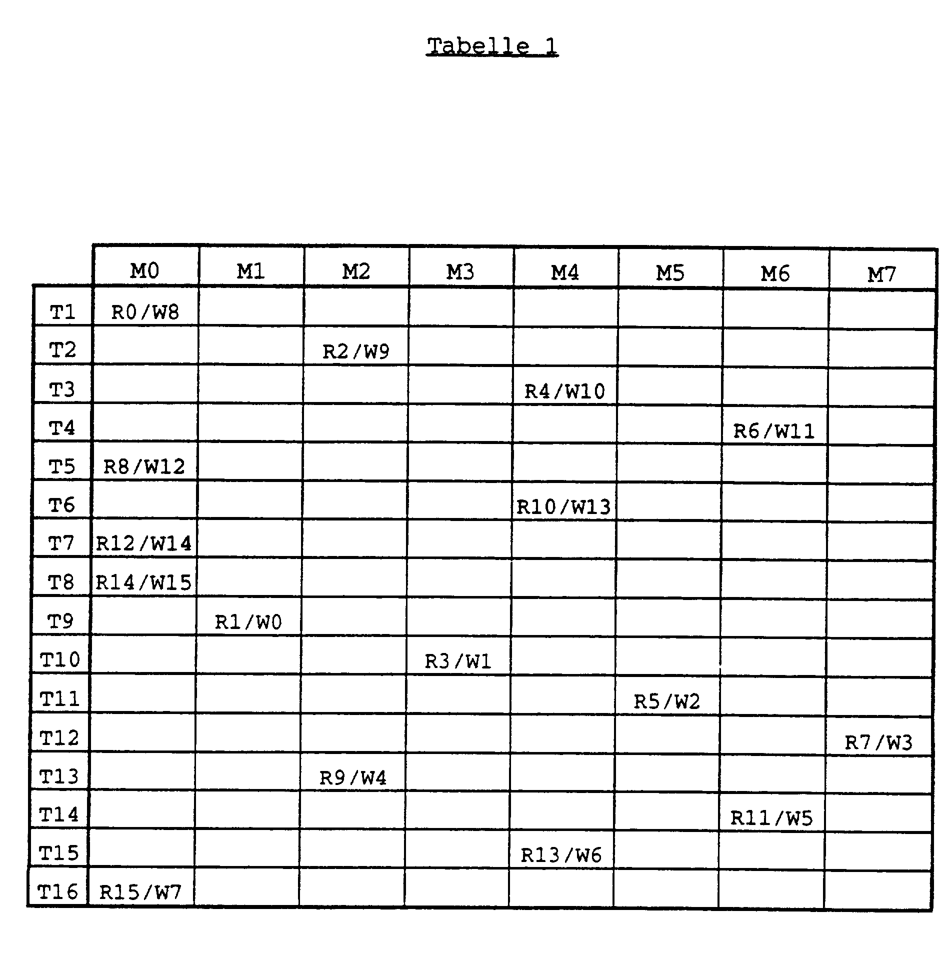

In der Tabelle sind mit M0, M1, ... M7 die Speichereinheiten bezeichnet, in welchen eingangs die ersten acht Zeilen des Vollbildes eingespeichert wurden, und zwar mit M0 die nullte Speichereinheit, mit M1 die erste Speichereinheit, mit M2 die zweite Speichereinheit, mit M3 die dritte Speichereinheit, mit M4 die vierte Speichereinheit, mit M5 die fünfte Speichereinheit, mit M6 die sechste Speichereinheit, und mit M7 die siebte Speichereinheit.

Mit T1, T2, ... T16 sind die Zeitpunkte bezeichnet, zu denen die in den entsprechenden Zeilen angegebenen Operationen an den Speichereinheiten M0 bis M7 durchgeführt werden. Die Zeitpunkte T1 bis T16 sind zeitlich aufeinanderfolgende Zeitpunkte.

Die zu den jeweiligen Zeitpunkten T1 bis T16 an den jeweiligen Speichereinheiten M0 bis M7 durchgeführten Operationen sind in der Tabelle 1 mit Rx und Wy bezeichnet, wobei Rx angibt, daß die x-te Zeile eines Vollbildes ausgelesen wird, und wobei Wy angibt, daß die y-te Zeile eines Vollbildes eingespeichert wird.

So gibt beispielsweise der Eintrag R0/W8 in Zeile T1, Spalte M0 der Tabelle 1 an, daß zum Zeitpunkt T1 aus der Speichereinheit M0 die nullte Zeile des Vollbildes gelesen und unmittelbar darauffolgend in diese Speichereinheit M0 die achte Zeile des Vollbildes eingespeichert wird.

Die nullte Zeile des Vollbildes kann aus der Speichereinheit M0 gelesen werden, weil, wie vorstehend erläutert, diese Zeile anfangs dort eingespeichert wurde. Diese nullte Zeile wird nach deren Auslesen durch die achte Zeile des Vollbildes überschrieben, weil die achte Zeile diejenige Zeile ist, welche zum Zeitpunkt T1 aus der Bilddatenausgabeeinheit ausgegeben wird (die Zeilen 1 bis 7 des Vollbildes wurden, wie vorstehend bereits erläutert wurde, bereits anfangs aus der Bilddatenausgabeeinheit ausgegeben und in den Speicher eingespeichert).

Während der Zeitpunkte T2 bis T4 beinhaltet die Speichereinheit M0 die Daten der achten Zeile des Vollbildes.

Zum Zeitpunkt T5 wird die achte Zeile des Vollbildes aus der Speichereinheit M0 ausgelesen und die Daten werden durch die Daten der zwölften Zeile des Vollbildes überschrieben.

Verfolgt man in der Tabelle 1 die zeitliche Abfolge der Lese- und Schreibvorgänge, so stellt man fest, daß diese zeitlich so gestaffelt sind, daß zu einem jeweiligen Zeitpunkt T1 ... T16 jeweils nur ein Auslesevorgang und ein Einspeichervorgang erfolgt.

Betrachtet man in der Tabelle 1 die Nummern der Zeilen des Vollbildes, welche zu aufeinanderfolgenden Zeitpunkten gelesen werden, so stellt man fest, daß zu den Zeitpunkten T1 bis T8 in aufsteigender Reihenfolge alle geradzahligen Zeilen (Zeilen 0, 2, 4, 6, 8, 10, 12 und 14) des Vollbildes aus dem Speicher ausgelesen werden, während zu den Zeitpunkten T9 bis T16 in aufsteigender Reihenfolge alle ungeradzahligen Zeilen (Zeilen 1, 3, 5, 7, 9, 11, 13 und 15) des Vollbildes aus dem Speicher gelesen werden.

Während der Zeitpunkte T1 bis T8 erfolgt also das Auslesen des ersten Halbbildes, wohingegen während der Zeitpunkte T9 bis T16 das Auslesen des zweiten Halbbildes erfolgt.

Mit dem Auslesen der Daten einer Zeile bzw. unmittelbar danach erfolgt ein Überschreiben der gelesenen Daten mit neuen Daten einer später anzuzeigenden Zeile.

Verfolgt man in der Tabelle 1 die Nummern der zu aufeinanderfolgenden Zeitpunkten eingespeicherten Zeilen, so stellt man fest, daß zu aufeinanderfolgenden Zeitpunkten jeweils unmittelbar aufeinanderfolgende Zeilen des anzuzeigenden Vollbildes in die Speichereinrichtung eingeschrieben werden, wobei dann, wenn die letzte Zeile eines Vollbildes in die Speichereinrichtung eingeschrieben wurde, mit der Einspeicherung der ersten Zeile des als nächstem anzuzeigenden Vollbildes fortgefahren wird.

Durch das Einspeichern der Daten einer neuen Zeile in eine Speichereinheit, deren Daten unmittelbar zuvor ausgelesen wurden, ist sichergestellt, daß durch das Einspeichern keine Daten überschrieben werden, die noch benötigt werden.

Andererseits ist durch die zeitliche Ablaufsteuerung des Einspeicherns und Auslesens von Daten aus der Speichereinrichtung und durch die optimierte Größe der Speichereinrichtung gewährleistet, daß die auszulesende Zeile trotz der geringen Speicherkapazität stets bereits in diese eingespeichert ist.

Infolge der erfindungsgemäßen Art des Einschreibens und Auslesens von Daten in bzw. aus der Speichereinrichtung verändert sich ständig die Zuordnung zwischen den jeweiligen Zeilennummern des Vollbildes und den Speichereinheiten, in welchen die Daten der betreffenden Zeilen gespeichert bzw. einzuspeichern sind.

Dies läßt sich anhand der Tabelle 1 nachvollziehen: während in den Speichereinheiten M0 bis M7 unmittelbar vor dem Zeitpunkt T1 die Zeilen 0 bis 7 des Vollbildes in der Reihenfolge 0, 1, 2, 3, 4, 5, 6 und 7 gespeichert waren, sind zu Beginn des nächsten Vollbild-Anzeigezyklus, d.h. unmittelbar nach dem Zeitpunkt T16 die Zeilen 0 bis 7 des nächsten Vollbildes in den Speichereinheiten M0 bis M7 in der Reihenfolge 7, 0, 4, 1, 6, 2, 5, 3 gespeichert.

Um es zu ermöglichen, daß zu jedem Zeitpunkt ermittelbar ist, in welcher Speichereinheit eine auszulesende Zeile gespeichert ist, wird laufend eine Tabelle verwaltet und aktualisiert.

Eine derartige Tabelle ist die nachfolgend gezeigte Tabelle 2.

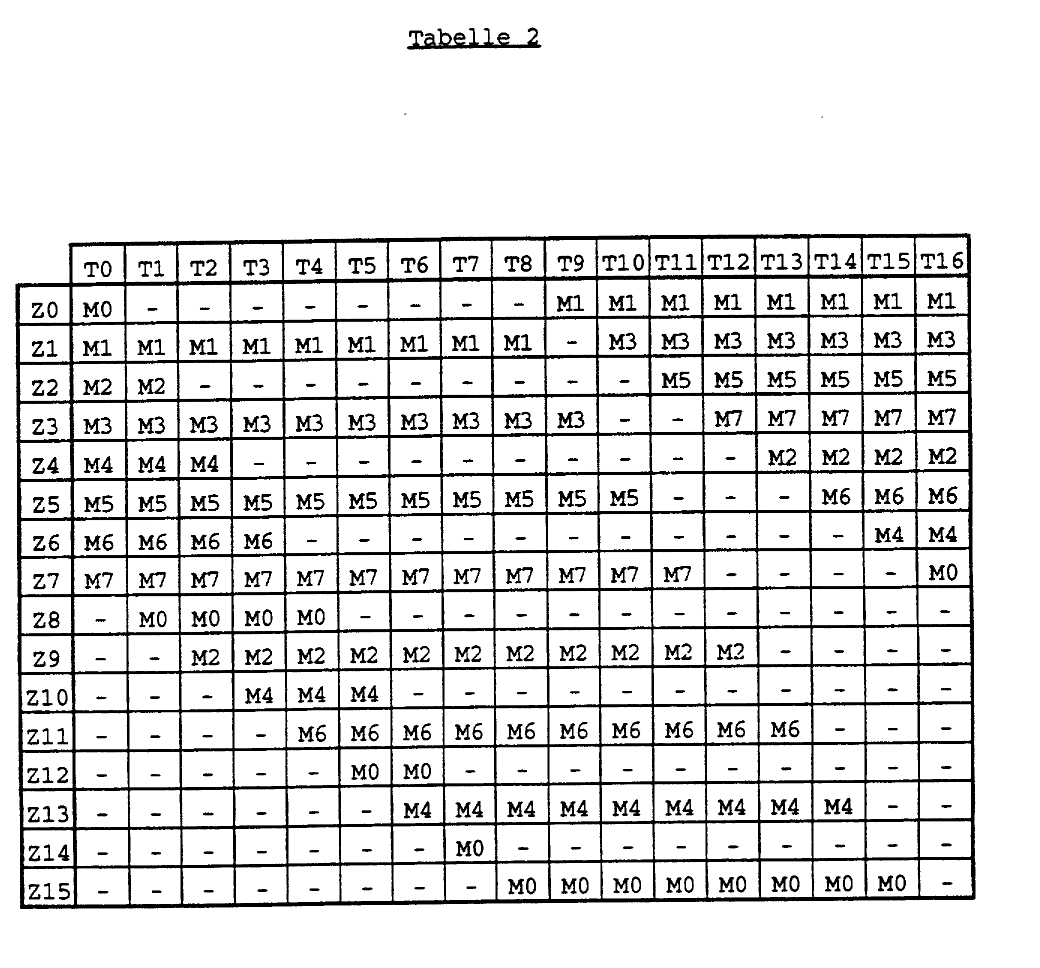

In der Tabelle 2 sind mit Z0, Z1, ... Z15 die Zeilen eines Vollbildes bezeichnet.

Die Speichereinheiten, in welchen die jeweiligen Zeilen des Vollbildes gespeichert sind, sind wie in der Tabelle 1 mit M0 bis M7 bezeichnet; das Symbol "-" in der Tabelle 2 gibt an, daß die betreffende Zeile zu dem jeweiligen Zeitpunkt gerade ausgelesen wurde bzw. momentan nicht in der Speichereinrichtung gespeichert ist.

Mit T0, T1, ..., T16 sind wiederum jeweils aufeinanderfolgende Zeitpunkte bezeichnet. Die jeweiligen Zeitpunkte entsprechen den in der Tabelle 1 angegebenen Zeitpunkten, wobei die in der Tabelle 2 angegebene Zuordnung zwischen der Zeilennummer der Vollbildes und der Speichereinheit, in welcher die betreffende Zeile gespeichert ist, dem Zustand nach dem zum angegebenen Zeitpunkt erfolgten Auslesen und Einspeichern von Daten in die Speichereinrichtung entspricht.

Anhand der Tabelle 2 ist nun ermittelbar, im welcher Speichereinheit zu einem jeweiligen Zeitpunkt eine bestimmte Zeile des Vollbildes gespeichert ist, was nachfolgend anhand eines Beispiels veranschaulicht werden soll.

Wie aus der Tabelle 2 ersichtlich ist, sind zum Zeitpunkt T0 die Zeilen 0 bis 7 des Vollbildes in den Speichereinheiten M0 bis M7 gespeichert (diese Zeilen wurden, wie vorstehend bereits erwähnt wurde, eingangs in dieser Reihenfolge dort eingespeichert.

Zum Zeitpunkt T1, wird, wie aus der Tabelle 1 ersichtlich ist und bei deren Beschreibung erläutert wurde, die Zeile 0 des Vollbildes aus der Speichereinheit M0 ausgelesen, und die ausgelesenen Daten werden durch die Daten der Zeile 8 des Vollbildes überschrieben. Dies ist in der Tabelle 2 dadurch kenntlich gemacht, daß in der Tabellenzeile Z0 zum Zeitpunkt T1 ein Sonderzeichen wie beispielsweise ein "-" auftaucht, was bedeutet, daß die Daten der Zeile 0 des Vollbildes in der Speichereinrichtung zum entsprechenden Zeitpunkt nicht mehr verfügbar sind, und daß in der Tabellenzeile Z8 zum Zeitpunkt T1 die Angabe "M0" auftaucht, was bedeutet, daß in der Speichereinheit M0 fortan die Daten der Zeile 8 des Vollbildes gespeichert sind.

In der Tabelle 2 lassen sich sämtliche in der Tabelle 1 zu den jeweiligen Zeitpunkten angegebenen Auslese- und Einspeicheroperationen verfolgen.

Zum Zeitpunkt T16 sind die Zeilen 0 bis 7 des (als nächstem darzustellenden) Vollbildes in den Speichereinheiten M1, M3, M5, M7, M2, M6, M4 und M0 gespeichert. D.h., in Übereinstimmung mit der Darstellung in der Tabelle 1 sind die Speichereinheiten M0 bis M7 zum Zeitpunkt T16 gemäß Tabelle 2 mit den Zeilen 7, 0, 4, 1, 6, 2, 5, 3 belegt.

Die Tabelle ermöglicht es, zu jedem beliebigen Zeitpunkt die Speichereinheit zu ermitteln, welche einem Auslese- und Einschreibzugriff zu unterziehen ist.

Es wird nun anhand der Figur der Ablauf des erfindungsgemäßen Verfahrens erläutert.

Gemäß der Figur beginnt der Verfahrensablauf mit einer Initialisierung. Während der Initialisierungsphase werden verschiedene Startbedingungen festgelegt. Im einzelnen werden hierbei folgende Zuweisungen ausgeführt:
n-te Speichereinheit ← n-te Zeile des Vollbildes
Tabelle 2 [n] = n
Schreibzeiger = N
Lesezeiger = 0
wobei n = 0, 1 ..., N-1 ist, und wobei N die Anzahl der Zeilen pro Halbbild ist.

Der Schreibzeiger gibt die Nummer der Zeile des Vollbildes an, welche als nächste in die Speichereinrichtung einzuspeichern ist.

Der Lesezeiger gibt die Nummer der Zeile des Vollbildes an, welche als nächste aus der Speichereinrichtung ausgelesen werden soll.

An die Initialisierung schließt sich das wiederholte abwechselnde Auslesen von gespeicherten Daten aus der Speichereinrichtung und Überschreiben der ausgelesenen Daten durch neue Daten an.

Zu diesem Zweck werden wiederholt die Schritte Speichereinheitsermittlung, Lesen aus dem Speicher, Schreiben in den Speicher, und Tabellen- und Zeigeraktualisierung durchgeführt.

Bei der Speichereinheitsermittlung wird ermittelt, auf welche Speichereinheit beim Auslesen und Einschreiben von Daten zuzugreifen ist, um die durch den Lesezeiger festgelegte Zeile des Vollbildes aus der Speichereinrichtung auszulesen. Diese jeweilige Zugriffsspeichereinheit ergibt sich aus der Operation
Zugriffsspeichereinheit = Tabelle 2 [Lesezeiger]

Beim Lesen aus dem Speicher werden dann die Daten ausgelesen, die in der zuvor ermittelten Speichereinheit gespeichert sind. Es handelt sich dabei um die Daten derjenigen Zeile des Vollbildes, die durch den Lesezeiger festgelegt ist.

Beim sich daran anschließenden Schreiben in den Speicher werden die zuvor ausgelesenen Daten durch neue Daten überschrieben.

Bei der Tabellen- und Zeigeraktualisierung werden die Tabelle 2, der Lesezeiger und der Schreibzeiger aktualisiert. Im einzelnen werden dabei folgende Zuweisungen ausgeführt:
Tabelle 2 [Lesezeiger] = Sonderzeichen wie z.B. "-"
Tabelle 2 [Schreibzeiger] = Zugriffsspeichereinheit
Lesezeiger = Lesezeiger + 2
wenn (Lesezeiger = 2N)
→ Lesezeiger = (Lesezeiger +1) modulo 2N
wenn (Lesezeiger > 2N)
→ Lesezeiger = (Lesezeiger -1) modulo 2N
Schreibzeiger = (Schreibzeiger + 1) modulo 2N

Nach der Aktualisierung verzweigt der Ablauf wieder zur Speichereinheitsermittlung und wiederholt diesen und die darauffolgenden Schritte so oft, bis die Bildanzeige beendet werden soll.

In einem System, bei welchem die Bilddaten in Form von Chrominanzinformation und Luminanzinformation umfassenden Videodaten vorliegen, ist das erfindungsgemäße Speicherverwaltungsverfahren grundsätzlich sowohl für die Chrominanzdaten als auch für die Luminanzdaten anwendbar.

Eine Ausnahme liegt dann vor, wenn, wie teilweise vorgesehen, die Chrominanzinformation nur mit der halben vertikalen Auflösung der Luminanzinformation vorgesehen ist. In diesem Fall muß die selbe Chrominanzinformation für beide Halbbilder verfügbar sein, so daß das erfindungsgemäße Speicherverwaltungsverfahren für die Chrominanzdaten nicht oder nur in abgewandelter Form anwendbar ist.

Aufgrund der Tatsache, daß das erfindungsgemäße Speicherverwaltungsverfahren unabhängig davon für die Luminanzdaten weiterhin unverändert anwendbar ist, kann die Speicherkapazität des für die Umsetzungseinheit bereitzustellenden Speichers selbst in diesem Fall auf einen sehr niedrigen Wert (2/3 der zur Speicherung eines Vollbildes erforderlichen Speicherkapazität) gesenkt werden.

Die Anwendung des vorstehend beschriebenen Verfahrens ermöglicht es, daß die Umsetzungseinheit zur Umsetzung von sequentiell zugeführten Bilddaten in eine zur Durchführung des Zeilensprungverfahrens geeignete Reihenfolge mit einem Speicher auskommt, dessen Speicherkapazität in jedem Fall deutlich geringer ist als die zur Speicherung eines Vollbildes erforderliche Speicherkapazität.

## Patentansprüche

1. Speicherverwaltungsverfahren zum Einspeichern und Auslesen von ein Bild repräsentierenden Daten in eine bzw. aus einer mindestens drei Speicherbereiche umfassenden Speichereinrichtung,
wobei das Einspeichern von Daten in die Speichereinrichtung und das Auslesen von Daten aus der Speichereinrichtung abwechselnd erfolgen,
wobei pro Einspeichervorgang und pro Auslesevorgang jeweils nur ein einziger Speicherbereich beschrieben bzw. ausgelesen wird,
wobei beim Einspeichern von Daten jeweils derjenige Speicherbereich beschrieben wird, aus dem unmittelbar zuvor Daten ausgelesen wurden,
wobei pro Einspeichervorgang und pro Auslesevorgang jeweils die eine Zeile eines Bildes repräsentierenden Daten eingeschrieben bzw. ausgelesen werden,
wobei mit dem Auslesen der Daten bereits begonnen wird, bevor die das Bild repräsentierenden Daten vollständig in der Speichereinrichtung gespeichert sind, und
wobei mit dem Auslesen der Daten frühestens nach dem Beschreiben von zwei Speicherbereichen begonnen wird.

2. Verfahren nach Anspruch 1,
**dadurch gekennzeichnet,**
daß mit dem Auslesen der Daten nach dem Beschreiben aller Speicherbereiche begonnen wird.

3. Verfahren nach Anspruch 1 oder 2,
**dadurch gekennzeichnet,**
daß ein Schreibzeiger verwaltet wird, dessen Inhalt angibt, die wievielte Zeile des Bildes beim nächsten Einspeichervorgang in die Speichereinrichtung eingeschrieben soll.

4. Verfahren nach einem der vorhergehenden Ansprüche,
**dadurch gekennzeichnet,**
daß ein Lesezeiger verwaltet wird, dessen Inhalt angibt, die wievielte Zeile des Bildes beim nächsten Auslesevorgang aus der Speichereinrichtung ausgelesen werden soll.

5. Verfahren nach einem der vorhergehenden Ansprüche,
**dadurch gekennzeichnet,**
daß eine Tabelle verwaltet wird, deren Inhalt angibt, welche Zeile des Bildes gerade in welchem Speicherbereich gespeichert ist.

6. Verfahren nach einem der Ansprüche 3 bis 5,
**dadurch gekennzeichnet,**
daß der Lesezeiger, der Schreibzeiger, und die Tabelle nach jedem Auslese- und Einspeichervorgang aktualisiert werden.

## Claims

1. Memory management method for entering and reading out data representing an image into or from a storage device comprising at least three memory areas,
in which the entering of data into the storage device and the reading out of data from the storage device are performed alternately,
in which respectively only a single memory area is written to or read out from per entering operation and per reading out operation,
in which, when data are entered, in each case that memory area is written to from which data had been read out immediately beforehand,
in which respectively the data representing a line of an image are written in or read out per entering operation and per reading out operation,
in which a start is already made on reading out the data before the data representing the image are completely stored in the storage device, and
in which a start is made on reading out the data at the earliest after two memory areas have been written to.

2. Method according to Claim 1, characterized in that a start is made on reading out the data after all the memory areas have been written to.

3. Method according to Claim 1 or 2, characterized in that a write pointer is managed whose contents specify which number of line of the image is to be written into the storage device during the next entering operation.

4. Method according to one of the preceding claims, characterized in that a read pointer is managed whose contents specify which number of line of the image is to be read out from the storage device during the next reading out operation.

5. Method according to one of the preceding claims, characterized in that a table is managed whose contents specify which line of the image is currently being stored in which memory area.

6. Method according to one of Claims 3 to 5, characterized in that the read pointer, the write pointer and the table are updated after each reading out operation and entering operation.

## Revendications

1. Procédé de gestion de mémoire pour la mémorisation et la lecture respective de données représentant une image dans un dispositif de mémoire qui comprend au moins trois régions de mémoire,
dans lequel la mémorisation de données dans le dispositif de mémoire et la lecture de données dans le dispositif de mémoire s'effectuent en alternance,
dans lequel à chaque opération de mémorisation et à chaque opération de lecture, à chaque fois seulement une unique région de mémoire est écrite resp. lue,
dans lequel, lors de la mémorisation de données, à chaque fois la région de mémoire qui est écrite est celle dans laquelle des données ont été lues immédiatement auparavant,
dans lequel, à chaque opération de mémorisation et à chaque opération de lecture, à chaque fois les données représentant une ligne d'une image sont écrites resp. lues,
dans lequel on commence déjà la lecture des données avant que les données représentant l'image aient été entièrement mémorisées dans le dispositif de mémoire, et
dans lequel on commence la lecture des données au plus tôt après l'écriture de deux régions de mémoire.

2. Procédé selon la revendication 1,
caractérisé
en ce qu'on commence la lecture des données après l'écriture de toutes les régions de mémoire.

3. Procédé selon la revendication 1 ou 2,
caractérisé
en ce qu'on gère un pointeur d'écriture dont le contenu indique le quantième de la ligne de l'image qui doit être écrite dans le dispositif de mémoire lors de la prochaine opération de mémorisation.

4. Procédé selon une des revendications précédentes,
caractérisé
en ce qu'on gère un pointeur de lecture dont le contenu indique le quantième de la ligne de l'image qui doit être lue dans le dispositif de mémoire lors de la prochaine opération de lecture.

5. Procédé selon une des revendications précédentes,
caractérisé
en ce qu'on gère un tableau dont le contenu indique quelle est la ligne de l'image qui est mémorisée à l'instant considéré et dans quelle région de la mémoire elle est mémorisée.

6. Procédé selon une des revendications 3 à 5,
caractérisé
en ce que le pointeur de lecture, le pointeur d'écriture et le tableau sont actualisés après chaque opération de lecture et de mémorisation.
